# EUROPÄISCHE PATENTSCHRIFT

(11) **EP 3 322 508 B1**
(45) Veröffentlichungstag und Bekanntmachung des Hinweises auf die Patenterteilung: **30.01.2019**
(21) Anmeldenummer: 16738730.7
(22) Anmeldetag: 08.07.2016
(51) Int. Cl.: B01D 53/86, B01J 23/44, B01J 23/52, B01J 35/00

(54) **VERFAHREN ZUR ENTFERNUNG VON SAUERSTOFF AUS EINEM KOHLENWASSERSTOFF UND SAUERSTOFF ENTHALTENDEN GASGEMISCH**
PROCESS FOR REMOVING OXYGEN FROM A GAS MIXTURE COMPRISING HYDROCARBON AND OXYGEN
PROCÉDÉ D'ÉLIMINATION D'OXYGÈNE CONTENU DANS UN MÉLANGE GAZEUX CONTENANT UN HYDROCARBURE ET DE L'OXYGÈNE

(30) Priorität: 13.07.2015 DE 102015213030
(43) Veröffentlichungstag der Anmeldung: 23.05.2018
(73) Patentinhaber: Wacker Chemie AG, 81737 München (DE)
(72) Erfinder: DAFINGER, Willibald, 94133 Röhrnbach (DE); ECKERT, Marc, 84556 Kastl (DE); RUDOLF, Günther, 84453 Mühldorf (DE)
(74) Vertreter: Schuderer, Michael
(86) Internationale Anmeldenummer: PCT/EP2016/066317
(87) Internationale Veröffentlichungsnummer: WO 2017/009243

(56) Entgegenhaltungen:
- EP-A1- 0 603 767
- EP-A2- 0 545 559
- DE-A1- 19 755 023
- GB-A- 2 067 216
- US-A- 3 056 646
- US-A1- 2010 048 972
- US-A1- 2013 108 531

## Beschreibung

Die Erfindung betrifft ein Verfahren zur Entfernung von Sauerstoff aus einem Kohlenwasserstoff und Sauerstoff enthaltenden Gasgemisch, wobei der Sauerstoff in Gegenwart eines Katalysators zumindest teilweise zu Kohlendioxid und Wasser umgesetzt wird.

Gasförmige Kohlenwasserstoffe, wie beispielsweise Ethylen, sind Standardgrundstoffe der chemischen Industrie. Solche Gase können beispielsweise Sauerstoff als Verunreinigung enthalten, der bei der weiteren Verwendung der Kohlenwasserstoffgase hinderlich ist und aus den Kohlenwasserstoffgasen entfernt werden sollte. Dies kann beispielsweise durch oxidative Reinigung erfolgen, bei der der Sauerstoff mit dem Kohlenwasserstoff zur Reaktion gebracht wird, unter Bildung von Kohlendioxid und Wasser.

Diese katalytische, oxidative Reinigung wird bei Gasgemischen mit relativ geringen Sauerstoff-Anteilen von kleiner als 5 Vol.-% schon lange praktiziert. Als Katalysatoren werden dazu Palladium oder Platin eingesetzt, welche auf Träger aus Aluminiumoxid, Titanoxid oder Siliziumoxid aufgetragen sind. So beschreibt beispielsweise die US 4,093,703 die oxidative Entfernung von Ethylen aus Gasgemischen, die bis zu 1,8 Vol. % Ethylen enthalten. Zur Reinigung von Ethylen aus Crackern lehrt die US 2010/0048972 A1 den Einsatz von Ruthenium-Katalysatoren. Die darin beschriebenen zu reinigenden Gase enthalten Sauerstoff im ppm-Bereich. Die EP 0 499 087 A1 befasst sich mit der Entfernung von Stickoxid-, Kohlenmonoxid- und Kohlenwasserstoff-Spuren aus Sauerstoff-reichen Abgasen von Gasturbinen. Die GB 883,945 beschreibt Verfahren zur Reinigung von Abgasen aus der oxidativen Umsetzung von Ammoniak zu Salpetersäure, bei der Stickoxide und Sauerstoff durch Zusatz von ungesättigten Verbindungen und Sulfiden entfernt werden. Van de Beld beschreibt in Chemical Engineering and Processing 34, 1995, Seiten 469 bis 478 die Totaloxidation von Ethen und Propan an Pd-Katalysatoren mit Al₂O₃-Träger.

Rusu diskutiert in Environmental Engineering and Management Journal, 2003, Vol. 2, No. 4, Seiten 273 bis 302 die Oxidation von Ethen, wobei Pd oder Pt auf TiO₂-, Al₂O₃- oder SiO₂-Träger eingesetzt werden. Hosseini empfiehlt in Catalysis Today, 122, (2007), Seiten 391 bis 396 für die Totaloxidation von Propen Pd und Au auf TiO₂ als Katalysator. Aus der EP 2 656 904 A1 sind Katalysatoren zur Reinigung von Abgasen aus Dieselmotoren bekannt. Die Katalysatoren enthalten eine katalytische Beschichtung mit Pt, Pd und einer kohlenstoffspeichernden Verbindung, wie Zeolith, sowie eine weitere Beschichtung mit Pd und Au.

Problematisch wird die katalytische, oxidative Reinigung wenn die Abgase überwiegend aus Kohlenwasserstoffen bestehen und zusätzlich O₂-Konzentrationen von mehr als 5 Vol.-% vorliegen. Denn jeder Katalysator benötigt zum Erreichen der katalytischen Aktivität eine bestimmte Temperatur, ab der er wirksam wird, die sogenannte Anspring- oder light-off-Temperatur. Unterhalb dieser Temperatur ist der Katalysator wenig wirksam bis unwirksam und die Reaktion findet nur mit ungenügend kleinen Konversionsraten statt. Oberhalb der Anspringtemperatur kann es aber bei Gasgemischen mit größeren Anteilen an Kohlenwasserstoffen und Sauerstoff, zu einem explosiven Verlauf der Oxidationsreaktion kommen, und zu unerwünschten Nebenreaktionen bei dem höheren Temperaturniveau, wobei Letzteres das geringere Problem ist. Insbesondere dann, wenn ein Gasgemisch vorliegt mit hoher Kohlenwasserstoff-Konzentration und/oder hohem Sauerstoffgehalt, und der Katalysator eine hohe Anspring-Temperatur benötigt, potenziert sich die Gefahr einer durchgehenden Reaktion. In der deutschen Patentanmeldung vom 20.11.2014 DE102014223759. 9 wird vorgeschlagen, das oxidativ zu reinigende Gasgemisch mit einem bereits gereinigten Gasgemisch zu verdünnen. Dies bedeutet aber einen zusätzlichen apparativen Aufwand und eine Erhöhung des Abgasvolumens. In der deutschen Patentanmeldung vom 28.11.2014 DE102014224470. 6 wird vorgeschlagen, die Anspring-Temperatur eines Palladium/Gold-Katalysators mittels Dotierung mit einem Alkalimetall abzusenken. Dies bedeutet einen erhöhten Aufwand bei der Katalysatorherstellung und damit eine Verteuerung.

Vor diesem Hintergrund bestand die Aufgabe, ein Verfahren zur katalytischen oxidativen Reinigung von Gasgemischen bereitzustellen, die zum Großteil aus Kohlenwasserstoffen bestehen und erhebliche Anteile an Sauerstoff enthalten. Dabei sollten die oben genannten Probleme gelöst werden können, und insbesondere die Bildung von Nebenprodukten minimiert, und Explosionen unterbunden werden können.

Gegenstand der Erfindung ist ein Verfahren zur Entfernung von Sauerstoff aus einem Kohlenwasserstoff und Sauerstoff enthaltenden Gasgemisch, wobei der Sauerstoff in Gegenwart eines Katalysators zumindest teilweise zu Kohlendioxid und Wasser umgesetzt wird, dadurch gekennzeichnet, dass als Katalysator ein Schalenkatalysator eingesetzt wird, aus einem als Formkörper ausgebildeten Katalysatorträger aus Bentonit mit einer äußeren Schale, welche
a) Gold und
b) ein oder mehrere Edelmetalle aus der Gruppe bestehend aus Palladium, Platin, Rhodium, Iridium enthält
welche unabhängig voneinander in metallischer Form, als Legierung und in Form von Salzen vorliegen können, und
welche keine Alkalimetalle oder Alkalimetallsalze enthält.

Die Gasgemische enthalten vorzugsweise Kohlenwasserstoffe mit 1 bis 7 Kohlenstoffatomen, besonders bevorzugt 1 bis 5 Kohlenstoffatomen und am meisten bevorzugt 1 bis 3 Kohlenstoffatome. Die Kohlenwasserstoffe liegen bei einem Druck von 1 bar_{abs}. vorzugsweise in Form eines Gases vor. Die Kohlenwasserstoffe haben bei einem Druck von 1 bar_{abs}. Siedepunkte von vorzugsweise ≤ -20°C, besonders bevorzugt ≤ -40°C und am meisten bevorzugt ≤ -60°C. Die Kohlenwasserstoffe können gesättigt oder vorzugsweise ethylenisch ungesättigt sein. Beispiele für gesättigte Kohlenwasserstoffe sind Methan, Ethan, Propan, Butan oder Pentan. Beispiele für ethylenisch ungesättigte Kohlenwasserstoffe sind Propen, Butadien, Acetylen und insbesondere Ethylen.

Die Kohlenwasserstoffe tragen vorzugsweise keine funktionellen Gruppen, wie Alkohol-Gruppen oder Halogenide, insbesondere keine Sauerstoffatome, Schwefelatome, Halogenatome oder Stickstoffatome enthaltende funktionelle Gruppen.

Das zu reinigende Gasgemisch enthält ein oder mehrere Kohlenwasserstoffe im Allgemeinen in einer Menge von mindestens 50 Vol.-%, vorzugsweise 60 bis 95 Vol.-%, besonders bevorzugt 70 bis 90 Vol.-%. Das Gasgemisch enthält Sauerstoff im Allgemeinen in einer Menge von bis zu 10 Vol.-%, vorzugsweise von 2 bis 10 Vol.-%, besonders bevorzugt von 5 bis 10 Vol.-%. Es können noch weitere Gase im Gasgemisch enthalten sein, beispielsweise Stickstoff, Edelgase, Wasserstoff, Kohlendioxid, Kohlenmonoxid und Wasserdampf, im Allgemeinen in einer Menge von 0 bis 40 Vol.-%. Die Angaben in Vol.-% beziehen sich auf das Gesamtvolumen des jeweiligen Gasgemisches und addieren sich jeweils insgesamt auf 100 Vol.-% auf.

Als Katalysator wird ein Schalenkatalysator eingesetzt, der einen als Formkörper ausgebildeten Katalysatorträger mit einer äußeren Schale umfasst. Bei einem sogenannten Schalenkatalysator wird der als Formkörper ausgebildete Katalysatorträger nicht vollständig von den katalytisch wirkenden Aktivkomponenten durchdrungen. Diese sind nur in einem mehr oder weniger tiefen äußeren Bereich des Formkörpers enthalten, das heißt nur in der Schale enthalten, während der weiter innen liegende Bereich des Trägers frei von Aktivkomponenten ist.

Aus dem Stand der Technik sind die gängigen Katalysatorformen bekannt, beispielsweise Kugeln, (Hohl)Zylinder oder Ringe. Die Dimensionierung der Katalysatorformkörper hängt von den Abmessungen des Reaktors (Reaktionsrohr) ab. Im Allgemeinen werden Kugeln mit einem Durchmesser von 3 bis 6 mm, Zylinder mit einem Durchmesser von 3 bis 6 mm und einer Länge von 3 bis 6 mm, und Hohlzylinder oder Ringe mit einem Durchmesser von 3 bis 6 mm und einer Länge von 3 bis 6 mm und einer Wandstärke von 1,5 bis 2 mm eingesetzt. Je nach Abmessung des Katalysatorträgers beträgt die Dicke der Schale vorzugsweise 0,1 bis 1 mm.

Als Trägermaterial verwendet man Bentonit. Als Bentonit bezeichnet man tonhaltige Gesteine, welches als Hauptbestandteil, im Allgemeinen mehr als 50 Gew.-%, Montmorillonit enthalten, ein Aluminiumhydrosilikat, das zur Gruppe der Phyllosilikate (Blätterstruktur-Silikate) gehört. Die Herstellung der Formkörper aus den pulverförmigen Trägermaterialien erfolgt in bekannter Weise mittels Pressen, oder Extrusion, gegebenenfalls unter Verwendung von Wasser, Bindern und Gleitmitteln, um stabile Formkörper zu erhalten. Die damit erhaltenen Formkörper werden anschließend getrocknet, vorzugsweise bei einer Temperatur von 25°C bis 100°C. Dem Trocknungsschritt schließt sich die Kalzinierung der Formkörper an. Die Kalzinierung kann in einem Ofen unter Luftatmosphäre, gegebenenfalls unter Schutzgas, erfolgen. Im Allgemeinen wird dazu auf eine Temperatur von 500°C bis 1000°C erhitzt.

Die Überführung des Katalysator-Formkörpers in einen aktiven Katalysator geschieht durch Aufbringen der katalytisch aktiven Komponenten Gold und Edelmetall b) oder deren Precursor-Verbindungen. Zur Beladung mit Gold und dem Edelmetall b) können die Katalysator-Formkörper mit einer Goldsalz und Edelmetallsalz enthaltenden Lösung imprägniert werden. Die Imprägnierung der Katalysator-Formkörper erfolgt jeweils mittels Tränken oder Besprühen der Katalysator-Formkörper unter Ausbildung der Schalenstruktur. Der fertige Katalysator kann anschließend bis auf eine Restfeuchte von weniger als 5 % getrocknet werden. Die Trocknung kann an Luft, gegebenenfalls unter Stickstoff, als Inertgas erfolgen.

Der Gold-Gehalt des Schalenkatalysators beträgt 0,5 bis 5 Gew.-%, bevorzugt 0,5 bis 2 Gew.-%, jeweils bezogen auf das Gesamtgewicht des Schalenkatalysators. Als Edelmetallkomponente b) wird Palladium bevorzugt. Der Gehalt an der Edelmetallkomponente b) beträgt 1 bis 10 Gew.-%, bevorzugt 1 bis 3 Gew.-%, jeweils bezogen auf das Gesamtgewicht des Schalenkatalysators.

Die Entfernung von Sauerstoff aus dem Gasgemisch kann in herkömmlichen Reaktoren in an sich bekannter Weise durchgeführt werden. Bevorzugte Reaktoren sind Rohrreaktoren oder Rohrbündelreaktoren. Die Reaktoren werden mit dem Schalenkatalysator beschickt. Der Reaktor wird von dem zu reinigenden Gasgemisch durchströmt. Vorzugsweise beträgt die Raumgeschwindigkeit GHSV des Gasgemisches 2000 bis 4000 h⁻¹, besonders bevorzugt 3000 bis 4000 h⁻¹ und am meisten bevorzugt 3500 bis 4000 h⁻¹ (GHSV = Gas Hourly Space Velocity = Quotient aus dem Volumenstrom des Gasgemisches in m³/h und dem Reaktorvolumen in m³).

Das zu reinigende Gasgemisch kann mehrfach, vorzugsweise nur einmal durch den Reaktor geführt werden. Im Reaktor herrscht ein Druck von vorzugsweise 1 bis 20 bar abs. und besonders bevorzugt 5 bis 15 bar abs.. Das Gasgemisch hat bei Eintritt in den Reaktor eine Temperatur von vorzugsweise ≤ 200°C, besonders bevorzugt ≤ 160°C. Nach Durchführung der erfindungsgemäßen Entfernung von Sauerstoff enthalten die Kohlenwasserstoffgase vorzugsweise ≤ 0,01 Vol.-%, besonders bevorzugt ≤ 0,001 Vol.-% und am meisten bevorzugt ≤ 0,0001 Vol.-% (1 Vol.-ppm) Sauerstoff, jeweils bezogen auf das Volumen des Gesamtgasstroms des gereinigten Kohlenwasserstoffgases.

Das erfindungsgemäße Verfahren eignet sich zur Reinigung von beliebigen Gasgemischen welche sowohl Kohlenwasserstoffe als auch Sauerstoff enthalten. Dies können Abgasströme aus chemischen Prozessen sein. Das erfindungsgemäße Verfahren eignet sich auch zur Reinigung von Produktströmen aus chemischen Prozessen, beispielsweise zur Entfernung von Sauerstoff aus dem Kreisgas der Vinylacetatmonomer-Herstellung.

Der Herstellungsprozess von Vinylacetat-Monomer (VAM) ist beispielsweise in der WO 2015/082450 A1 beschrieben. Bei der Herstellung von Vinylacetat-Monomer müssen aus dem in den Reaktor zurückgeführten Kreisgas die Inerten Argon und Ethan als Hauptkomponenten, in geringerem Maße N₂ und Methan, kontinuierlich ausgeschleust werden, andernfalls käme die Reaktion zu VAM zum Erliegen. Bei einer üblichen Aufarbeitung werden 1 bis 25 Vol.-% des Kreisgases, nach Abtrennung von Vinylacetat und Essigsäure, zur Entfernung von Inerten einer thermischen Entsorgung (Verbrennung) zugeführt. Im Allgemeinen enthält dieses Kreisgas, nach Abtrennung von Vinylacetat und Essigsäure, etwa 70 Vol.-% Ethylen und etwa 5 Vol.-% Sauerstoff. Daher geht dem Prozess dabei ein beträchtlicher Anteil an Ethylen verloren. Es gilt daher das Ethylen so zurückzugewinnen, dass es wieder in den VAM-Prozess zurückgeführt werden kann. Eine Voraussetzung dafür ist es, den Sauerstoffanteil im zurückzuführenden Ethylen zu reduzieren. Die Entfernung von Sauerstoff aus dem nicht umgesetzten Ethylen im VAM-Kreisgas-System kann mit dem erfindungsgemäßen Verfahren erfolgen.

Der Anteil des Kreisgases, welcher zur Ausschleusung von Inerten aus dem Kreisprozess entfernt wird, wird zunächst mit dem erfindungsgemäßen Verfahren von Sauerstoff befreit. Vorzugsweise enthält der so behandelte Kreisgasanteil < 300 Vol.-ppm Sauerstoff. Danach wird dieser Kreisgasanteil in einem Kreisgaswäscher von Kohlendioxid befreit. Dazu wird dieses in einer Kolonne vorzugsweise mit einer wässerigen NaOH-Lösung gewaschen. Besonders bevorzugt ist eine Kreisgaswäsche in der zunächst in einer ersten Kolonne mit einer wässerigen Kaliumcarbonatlösung gewaschen wird, und in einer zweiten Kolonne mit einer wässrigen NaOH-Lösung gewaschen. Anschließend wird dem so behandelten Kreisgasanteil das Wasser entzogen. Dies kann beispielweise mittels Molsieb-Trocknung erfolgen.

Der so behandelte Kreisgasanteil ist vorzugsweise annähernd frei von Sauerstoff, Kohlendioxid und Wasser und enthält nur noch Ethylen und die Inerten Methan, Ethan, Argon und Stickstoff). Der Ethylenanteil kann daher mittels fraktionierter Tiefkaltkondensation bei einer Temperatur von -140°C bis -100°C auskondensiert werden. Das Ethylen wird dann dem VAM-Kreisgasprozess wieder zugeführt. Die Inerten werden der Verbrennung zugeführt.

Die nachfolgenden Beispiele dienen zur weiteren Erläuterung der Erfindung:

### Vergleichsbeispiel 1:

Als Vergleichskatalysator wurde ein Trägerkatalysator eingesetzt, aus einem Träger aus Bentonit in Form von Kugeln mit einem Durchmesser von 5 mm, welcher mit 3,8 Gew.-% Palladium und 3,8 Gew.-% Gold und mit 2,5 Gew.-% Kalium-Acetat, jeweils bezogen das Gewicht des Bentonit-Trägers, durchimprägniert war.

### Beispiel 2:

Es wurde ein Trägerkatalysator eingesetzt, aus einem Träger aus Bentonit in Form von Kugeln mit einem Durchmesser von 5 mm, welcher mit 1,6 Gew.-% Palladium und 0,8 Gew.-% Gold, jeweils bezogen das Gewicht des Bentonit-Trägers, so imprägniert war, dass die Aktivkomponenten nur in einer Oberflächenschichtdicke von circa 0,5 mm enthalten waren.

Zur Testung wurde jeweils ein mit Öl temperierter Strömungsreaktor (Reaktorlänge 1200 mm, Innendurchmesser 19 mm) mit den Trägerkatalysatoren aus Vergleichsbeispiel 1 oder Beispiel 2 befüllt. Als Kohlenwasserstoff und Sauerstoff enthaltendes Gasgemisch wurde das Kreisgas aus einer Anlage zur Vinylacetatmonomer-Herstellung eingesetzt, mit einer Zusammensetzung, welche man nach Abtrennung von Vinylacetatmonomer und Essigsäure erhält: 75 Vol.-% Ethylen, 10 Vol.-% Sauerstoff, 5 Vol.-% Ar, 0,5 Vol.-% Methan, 1,5 Vol.-% CO₂, 4 Vol.-% Ethan und 4 Vol.-% N₂.

Getestet wurde bei einer Temperatur des Gasgemisches von 170°C, bei einem Druck von 9,5 bar abs. und einer Raumgeschwindigkeit (GHSV) des Gasgemisches von 3000 h⁻¹. Die Gasgemische wurden jeweils am Ausgang des Reaktors mittels online Gaschromatographie analysiert.

Mit dem Trägerkatalysator aus Vergleichsbeispiel 1 wurde nach Austritt des Gasgemisches aus dem Reaktor ein Sauerstoff-Anteil von 0,3 Vol.-% gemessen, das heißt 97 % Umsatz des Sauerstoffs.

Mit dem Trägerkatalysator aus Beispiel 2 konnte nach Austritt des Gasgemisches aus dem Reaktor kein Sauerstoff gemessen werden, das heißt 100 % Umsatz des Sauerstoffs.

Damit zeigt sich, dass bei dem erfindungsgemäßen Verfahren, trotz einer deutlich geringeren Edelmetall-Konzentration, die Anspringtemperatur deutlich niedriger ist, da bei 170°C der komplette Sauerstoff verschwunden ist. Ausschlaggebend für die niedrige light-off Temperatur ist die Konzentrierung der Aktivkomponenten auf der Oberfläche des Katalysator-Trägers (Schalenkatalysator).

## Patentansprüche

1. Verfahren zur Entfernung von Sauerstoff aus einem Kohlenwasserstoff und Sauerstoff enthaltenden Gasgemisch, wobei der Sauerstoff in Gegenwart eines Katalysators zumindest teilweise zu Kohlendioxid und Wasser umgesetzt wird, **dadurch gekennzeichnet, dass** als Katalysator ein Schalenkatalysator eingesetzt wird, aus einem als Formkörper ausgebildeten Katalysatorträger aus Bentonit mit einer äußeren Schale, welche
a) Gold und
b) ein oder mehrere Edelmetalle aus der Gruppe bestehend aus Palladium, Platin, Rhodium, Iridium enthält
welche unabhängig voneinander in metallischer Form, als Legierung und in Form von Salzen vorliegen können, und
welche keine Alkalimetalle oder Alkalimetallsalze enthält.

2. Verfahren nach Anspruch 1, **dadurch gekennzeichnet, dass** die Dicke der Schale des Katalysatorträgers 0,1 bis 1 mm beträgt.

3. Verfahren nach Anspruch 1 bis 2, **dadurch gekennzeichnet, dass** der Gehalt an a) Gold 0,5 bis 5 Gew.-% beträgt, und der Gehalt an der Edelmetallkomponente b) 1 bis 10 Gew.-% beträgt, jeweils bezogen auf das Gesamtgewicht des Schalenkatalysators.

4. Verfahren nach Anspruch 1 bis 3, **dadurch gekennzeichnet, dass** als Edelmetallkomponente b) Palladium enthalten ist.

5. Verfahren nach Anspruch 1 bis 4, **dadurch gekennzeichnet, dass** das Verfahren bei einem Druck von 1 bis 20 bar abs. und einer Temperatur des Gasgemisches von ≤ 200°C durchgeführt wird.

6. Verfahren nach Anspruch 1 bis 5, **dadurch gekennzeichnet, dass** das Gasgemisch gesättigte oder ungesättigte Kohlenwasserstoffe mit 1 bis 7 Kohlenstoffatomen enthält.

7. Verfahren nach Anspruch 1 bis 6, **dadurch gekennzeichnet, dass** das Gasgemisch ein oder mehrere Kohlenwasserstoffe in einer Menge von mindestens 50 Vol.-%, Sauerstoff in einer Menge von bis zu 10 Vol.-%, und gegebenenfalls noch weitere Gase in einer Menge von 0 bis 40 Vol.-% enthält, jeweils bezogen auf das Gesamtvolumen des Gasgemisches.

8. Verfahren nach Anspruch 1 bis 7, **dadurch gekennzeichnet, dass** das Gasgemisch aus Abgasströmen aus chemischen Prozessen oder aus Produktströmen aus chemischen Prozessen stammt.

9. Verfahren nach Anspruch 1 bis 8, **dadurch gekennzeichnet, dass** als Gasgemisch das Kreisgas aus der Vinylacetatmonomer-Herstellung verwendet wird, welches nach Abtrennung von Vinylacetat und Essigsäure erhalten wird, und nach der Entfernung von Sauerstoff aus dem Gasgemisch, dieses von Kohlendioxid befreit wird, danach das Wasser entzogen wird, und der Anteil an Ethylen mittels fraktionierter Tiefkaltkondensation auskondensiert wird.

## Claims

1. Process for removing oxygen from a gas mixture containing hydrocarbon and oxygen, where the oxygen is at least partly converted into carbon dioxide and water in the presence of a catalyst, **characterized in that** a coated catalyst composed of a catalyst support composed of bentonite and configured as shaped body and an outer shell which contains
a) gold and
b) one or more noble metals from the group consisting of palladium, platinum, rhodium, iridium,
which are able, independently of one another, to be present in metallic form, as alloy or in the form of salts, and does not contain any alkali metals or alkali metal salts,
is used as catalyst.

2. Process according to Claim 1, **characterized in that** the thickness of the shell of the catalyst support is from 0.1 to 1 mm.

3. Process according to either of Claims 1 and 2, **characterized in that** the content of a) gold is from 0.5 to 5% by weight and the content of the noble metal component b) is from 1 to 10% by weight, in each case based on the total weight of the coated catalyst.

4. Process according to any of Claims 1 to 3, **characterized in that** palladium is present as noble metal component b).

5. Process according to any of Claims 1 to 4, **characterized in that** the process is carried out at a pressure of from 1 to 20 bar abs. and a temperature of the gas mixture of ≤ 200°C.

6. Process according to any of Claims 1 to 5, **characterized in that** the gas mixture contains saturated or unsaturated hydrocarbons having from 1 to 7 carbon atoms.

7. Process according to any of Claims 1 to 6, **characterized in that** the gas mixture contains one or more hydrocarbons in an amount of at least 50% by volume, oxygen in an amount of up to 10% by volume and optionally further gases in an amount of from 0 to 40% by volume, in each case based on the total volume of the gas mixture.

8. Process according to any of Claims 1 to 7, **characterized in that** the gas mixture originates from offgas streams from chemical processes or from product streams from chemical processes.

9. Process according to any of Claims 1 to 8, **characterized in that** the recycle gas from the preparation of vinyl acetate monomer which is obtained after vinyl acetate and acetic acid have been separated off and is, after removal of oxygen from the gas mixture, freed of carbon dioxide and is then subjected to removal of the water before the ethylene proportion is condensed out by means of fractional low-temperature condensation, is used as gas mixture.

## Revendications

1. Procédé d'élimination d'oxygène à partir d'un mélange gazeux contenant des hydrocarbures et de l'oxygène, l'oxygène étant au moins partiellement transformé en dioxyde de carbone et eau en présence d'un catalyseur, **caractérisé en ce qu'**un catalyseur à enveloppe est utilisé en tant que catalyseur, constitué par un support de catalyseur sous la forme d'un corps moulé en bentonite avec une enveloppe extérieure, qui contient :
a) de l'or et
b) un ou plusieurs métaux nobles du groupe constitué par le palladium, le platine, le rhodium, l'iridium,
qui peuvent se présenter indépendamment les uns des autres sous forme métallique, sous la forme d'un alliage ou sous la forme de sels, et
qui ne contient pas de métaux alcalins ou de sels de métaux alcalins.

2. Procédé selon la revendication 1, **caractérisé en ce que** l'épaisseur de l'enveloppe du support de catalyseur est de 0,1 à 1 mm.

3. Procédé selon la revendication 1 ou 2, **caractérisé en ce que** la teneur en a) or est de 0,5 à 5 % en poids, et la teneur en composant métal noble b) est de 1 à 10 % en poids, à chaque fois par rapport au poids total du catalyseur à enveloppe.

4. Procédé selon les revendications 1 à 3, **caractérisé en ce que** du palladium est contenu en tant que composant métal noble b).

5. Procédé selon les revendications 1 à 4, **caractérisé en ce que** le procédé est réalisé à une pression de 1 à 20 bar abs, et à une température du mélange gazeux ≤ 200 °C.

6. Procédé selon les revendications 1 à 5, **caractérisé en ce que** le mélange gazeux contient des hydrocarbures saturés ou insaturés de 1 à 7 atomes de carbone.

7. Procédé selon les revendications 1 à 6, **caractérisé en ce que** le mélange gazeux contient un ou plusieurs hydrocarbures en une quantité d'au moins 50 % en volume, de l'oxygène en une quantité de jusqu'à 10 % en volume, et éventuellement d'autres gaz en une quantité de 0 à 40 % en volume, à chaque fois par rapport au volume total du mélange gazeux.

8. Procédé selon les revendications 1 à 7, **caractérisé en ce que** le mélange gazeux provient de courants de gaz d'échappement de procédés chimiques ou de courants de produits de procédés chimiques.

9. Procédé selon les revendications 1 à 8, **caractérisé en ce que** le gaz circulaire de la production d'acétate de vinyle monomère est utilisé en tant que mélange gazeux, qui est obtenu après la séparation d'acétate de vinyle et d'acide acétique, et, après l'élimination de l'oxygène du mélange gazeux, celui-ci est débarrassé du dioxyde de carbone, puis l'eau est extraite, et la fraction d'éthylène est éliminée par condensation fractionnée à basse température.
